# FASCICULE DE BREVET EUROPEEN

(11) **EP 1 653 072 B1**
(45) Date de publication et mention de la délivrance du brevet: **15.04.2009**
(21) Numéro de dépôt: 05300843.9
(22) Date de dépôt: 21.10.2005
(51) Int. Cl.: F02F 7/00

(54) **Carter de moteur à combustion interne**
Schutzverkleidung einer Brennfraftmaschine
Engine cover

(30) Priorité: 21.10.2004 FR 0452381
(43) Date de publication de la demande: 03.05.2006
(73) Titulaire: RENAULT S.A.S., 92100 Boulogne Billancourt (FR)
(72) Inventeur: Corre, Sylvain, 78450 Villepreux (FR)

(56) Documents cités:
- DE-U1- 29 705 972
- US-A- 4 020 970
- US-A- 4 559 910
- US-A- 4 950 210
- PATENT ABSTRACTS OF JAPAN vol. 2000, no. 22, 9 mars 2001 (2001-03-09) & JP 2001 123928 A (SUMITOMO WIRING SYST LTD), 8 mai 2001 (2001-05-08)
- PATENT ABSTRACTS OF JAPAN vol. 1995, no. 05, 30 juin 1995 (1995-06-30) & JP 07 042571 A (NISSAN MOTOR CO LTD), 10 février 1995 (1995-02-10)

## Description

La présente invention concerne les carters de distribution de moteur à combustion interne, et plus particulièrement des carter de distribution protection de composants du moteur.

Il est connu de réaliser des opérations de maintenance sur des organes d'un moteur de véhicule automobile. Une des opérations de maintenance sur le système de distribution consiste à vérifier et corriger si nécessaire la tension de la courroie qui entraîne les éléments de ce système. Il s'agit d'une opération dont la fréquence est plus importante que les autres opérations de maintenance du système de distribution. C'est pourquoi elle doit être rapide. Cependant, pour garantir une étanchéité, la courroie de distribution est recouverte par un carter. Il faut donc prévoir un accès facile au galet tendeur de la courroie, mais tout en tenant compte de la contrainte d'étanchéité à la poussière et aux saletés.

Les solutions connues utilisent des couvercles qui une fois assemblés forment le carter de distribution. Le fait d'utiliser plusieurs couvercles permet par exemple de réaliser l'opération sans avoir à sortir le moteur du véhicule, car souvent le carter de distribution sert aussi de support moteur.

De telles solutions restent insuffisantes, car l'espace disponible pour le démontage du couvercle correspondant est très réduit.

Le document JP2001123928 propose un couvercle de culasse comportant une trappe d'accès à des bobines d'allumage. La trappe comporte un évidement formée dans une paroi du couvercle, et un membre pour couvrir les bobines monté coulissant sur le couvercle entre une position fermée dans laquelle il obture l'évidement et une position ouverte d'accès aux bobines du moteur. Toutefois, l'introduction d'un tel membre monté coulissant peut être difficile lors d'une opération de maintenance, et un tel membre peut générer des bruits dus aux vibrations du moteur quand il est en fonctionnement.

L'invention vise à pallier les inconvénients de l'état de la technique. Dans ce but elle fournit un carter de distribution de moteur à combustion interne comportant une trappe d'accès à un composant du moteur qui comporte une ouverture formée dans une paroi du carter, une porte montée coulissante sur le carter entre une position fermée dans laquelle elle obture l'ouverture et une position ouverte d'accès au composant du moteur. Selon l'invention, la trappe comporte des moyens de guidage définissant des rainures de coulissement de la porte qui possède un angle d'ouverture d'au moins 1 degré de part et d'autre d'un plan médian par rapport à l'épaisseur de la porte.

Selon d'autres caractéristiques de l'invention ;
- la trappe peut comporter des moyens de blocage de la porte dans la position fermée,
- les moyens de blocage peuvent être des moyens de blocage par emboîtement élastique,
- Le carter peut comporter une goulotte d'étanchéité rentrant à l'intérieur d'une poulie d'entraînement des accessoires montée sur le vilebrequin du moteur,
- la porte peut comporter un moyen de préhension.

La présente invention et ses avantages seront mieux compris à la lecture de la description détaillée d'un mode de réalisation pris à titre d'exemple et nullement limitatif, et illustré par les dessins annexés sur lesquels :
- la figure 1 est une vue du moteur avec les couvercles formant le carter de distribution en éclaté.
- la figure 2 est une vue montrant l'implantation du moteur dans le compartiment moteur et l'encombrement correspondant au côté distribution.
- la figure 3 est un détail de la trappe d'accès et de son logement

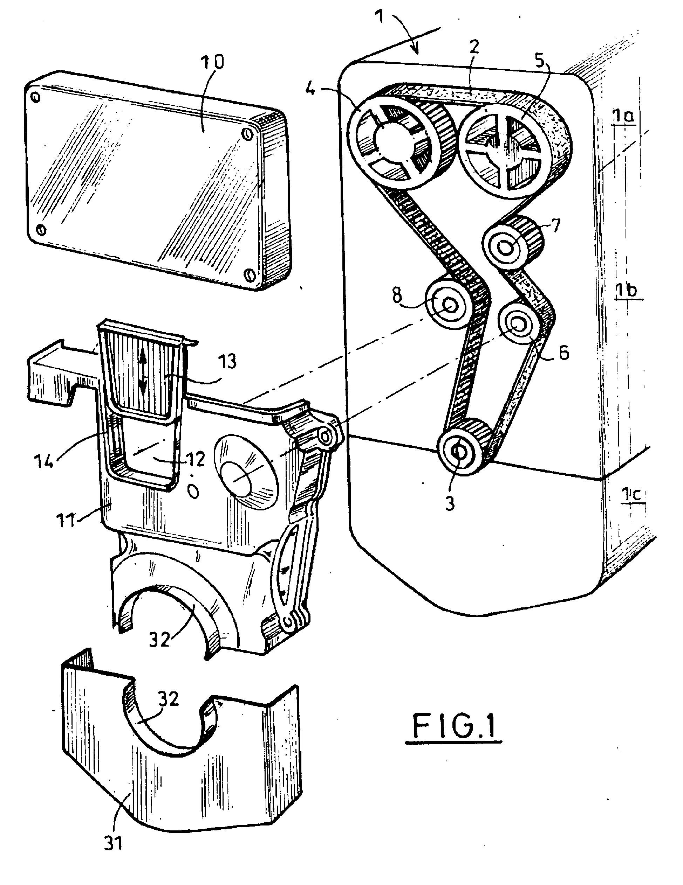

La figure 1 représente le côté distribution d'un moteur à combustion interne 1 comportant une culasse 1a montée sur un bloc-cylindres 1b, et un carter d'huile 1c monté également sur le carter cylindre 1b. La culasse 1a représentée dans cet exemple de réalisation comporte deux arbres à cames en tête non représentés. On trouve de ce côté distribution la courroie 2 de distribution entraînée par une poulie 3 du vilebrequin et entraînant les poulies 4 et 5 des deux arbres à cames du moteur 1. La courroie 2 entraîne également la poulie 6 de la pompe à eau. Pour augmenter l'enroulement de la courroie 2 sur les poulies, on peut utiliser des galets de renvoi, comme par exemple le galet de renvoi 7. Une fois la courroie 2 mise en place sur les poulies, on utilise un galet tendeur 8. Le galet 8 permet de tendre la courroie 2 avec une valeur de tension prédéterminée. Le galet tendeur 8 est réglable en position afin d'obtenir la valeur de tension de la courroie 2 qui convient.

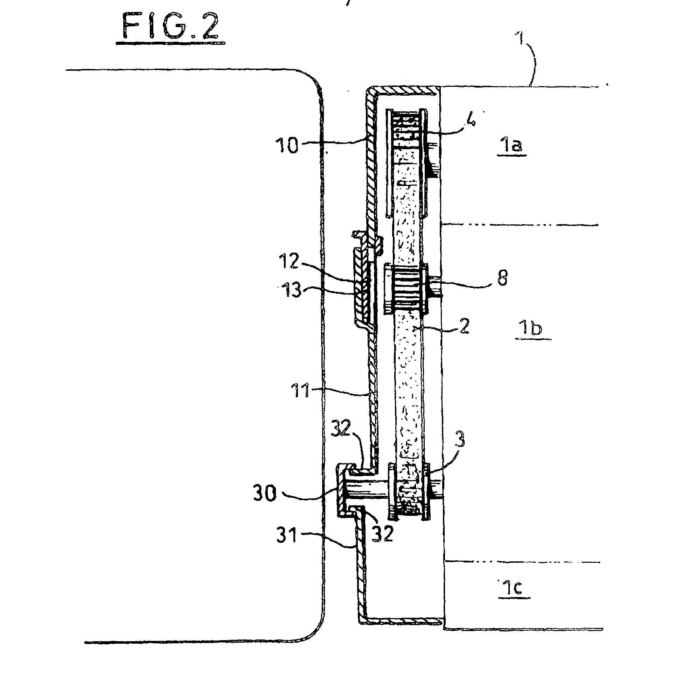

En référence aussi à la figure 2, le système de distribution, composé des poulies 3 à 6, du galet de renvoi 7, du galet tendeur 8 et de la courroie 2, est recouvert par un carter de distribution. Le carter de distribution est composé d'un carter supérieur 10 et d'un couvercle inférieur 11. Ces deux carters 10 et 11 se fixent sur le côté distribution du moteur par l'intermédiaire de vis. Le carter de distribution permet d'assurer une étanchéité à la poussière et aux saletés qui pourraient endommager rapidement la courroie 2. Le carter peut comporter un troisième carter 31, mais il peut également faire partie du moteur 1.

Le carter supérieur 10 permet en plus d'assurer la fonction de support du moteur 1. Il peut comporter des moyens de fixation non représenté à la caisse du véhicule. Il est généralement réalisé en matériau métallique car il doit avoir une bonne résistance mécanique, notamment pour supporter une partie du moteur 1.

Le carter inférieur 11 prolonge le carter supérieur 10 jusqu'au niveau de la poulie 3 du vilebrequin du moteur 1. Le carter inférieur 11 est prévu pour faciliter l'accès à un composant du moteur, par exemple pour faciliter les opérations de maintenance sur le galet tendeur 8 de la courroie 2. Il comporte à cet effet une trappe d'accès à ce galet tendeur 8.

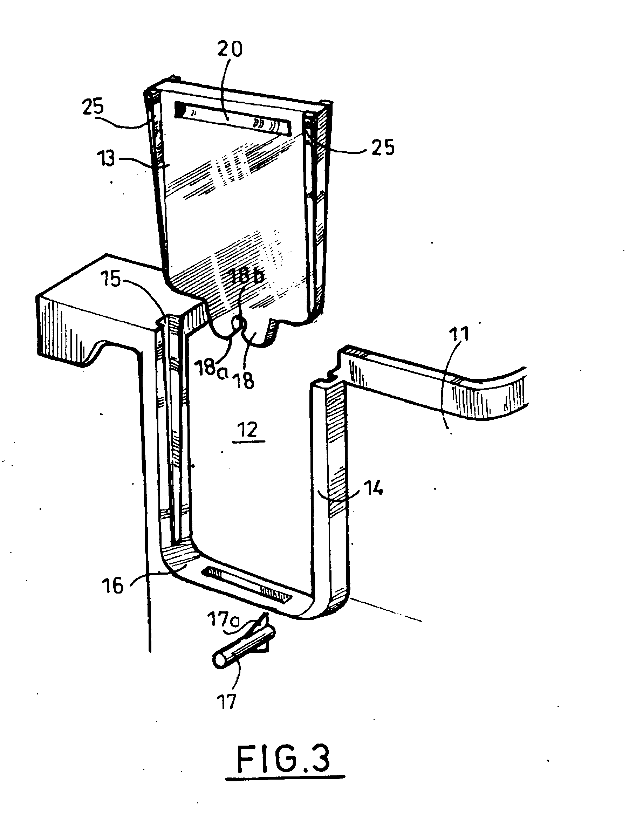

En référence aussi à la figure 3, cette trappe d'accès se présente sous la forme d'une ouverture 12 formée dans la paroi du carter inférieur 11, et disposée au niveau du galet tendeur 8. Afin d'assurer une étanchéité du carter inférieur 11 la trappe d'accès comporte également une porte 13 montée mobile sur le carter 11. La porte 13 est montée mobile dans un plan parallèle à son plan entre une position fermée dans laquelle elle obture l'ouverture 12 et une position ouverte d'accès au galet tendeur 8.

La trappe d'accès comporte également des moyens de guidage.

En référence à la figure 3, ces moyens de guidage comportent des pattes 14 qui sont disposées sur les côtés de l'ouverture 12 et qui définissent chacune une rainure 15 de coulissement en Vé dans laquelle coulisse la porte 13. Une patte 16 disposée sur un bord de l'ouverture 12 entre les deux pattes 14 permet de stopper le coulissement de la porte 13 lorsqu'elle vient obturer l'ouverture 12. Cette patte 16 correspond à la butée du coulissement de la porte 13 dans les rainures 15.

La trappe d'accès comporte aussi des moyens de blocage de la porte 13 dans sa position fermée. Ces moyens de blocage sont des moyens de blocage par emboîtement élastique. Les moyens de blocage par emboîtement élastique sont constitués d'un système de type agrafe ; le carter inférieur 11 comporte, au voisinage de la patte 16 de butée de coulissement de la porte 13, un plot cylindrique 17 et la porte 13 comporte une patte 18 définissant une ouverture triangulaire 18a ouverte vers l'extérieur et dont l'extrémité se superpose avec une ouverture circulaire 18b. La largeur de la jonction entre l'ouverture triangulaire 18a et l'ouverture circulaire 18b est inférieure au diamètre du plot 17, de sorte que le plot 17 s'emboîte dans l'ouverture circulaire 18b de force, par déformation élastique des parties de la patte 18 de chaque côté des ouvertures circulaire 18b et triangulaire 18a, et qu'il reste ensuite prisonnier de l'ouverture circulaire 18b et ceci sans jeu.

La porte 13 comporte sur sa face supérieure et sur sa face inférieure des guides 25. Ces guides 25 ont la forme d'un triangle rectangle. Ils sont prévus pour se loger dans les rainures 15 des pattes 14. Les rainures 15 possèdent un angle d'ouverture prévu pour recevoir ces guides 25. L'angle d'ouverture est d'au moins 1 degré de part et d'autre d'un plan médian par rapport à l'épaisseur de la porte 13. L'ouverture des rainures vers l'arrivé de la porte 13 avant son coulissement facilite l'introduction de cette dernière lors de l'opération de maintenance. De plus, une fois fixée sur le carter inférieur 11, la porte 13 ne peut plus bouger et il n'existe pas de jeu entre les rainures 15 et les guides 25, ce qui est très important pour diminuer les bruits dus au vibrations du moteur quand il est en fonctionnement.

Pour améliorer le maintien de la porte 13 dans les rainures sans jeu, il est possible de prévoir un rétrécissement des rainures 15 permettant de bloquer les guides 25. Les rainures 15 comportent ce rétrécissement du côté où la porte 13 vient se bloquer, du côté de la patte 16, et il peut consister en un deuxième angle d'ouverture inférieur à l'angle d'ouverture décrit précédemment. On parle alors d'un premier angle dit « ouvert » pour faciliter le montage, et d'un deuxième angle dit « fermé » pour le serrage volontaire de la porte 13 dans les rainures 15.

La porte 13 comporte également un système de préhension permettant de la manipuler soit pour l'extraire du carter inférieur 11, soit pour l'insérer dans les rainures 15 des pattes 14. Ce système de préhension peut se présenter sous la forme d'un évidemment 20 dans la face de la porte 13 tournée vers l'extérieur. Selon une variante de réalisation, le moyen de préhension peut être réalisé par moletage d'une partie de la surface extérieure du carter inférieur 11, où encore à l'aide d'une tirette perpendiculaire à la face de la porte tournée vers l'extérieur.

La porte 13 peut être reliée au carter inférieur 11 par un cordon ou pour tout autre moyen équivalent connu de l'homme du métier, ceci dans le but de ne pas égarer la porte lors des opérations de maintenance sur le galet tendeur 8.

Généralement l'espace disponible pour cette opération de maintenance est très réduit. Le fait que la porte 13 soit coulissante présente donc un avantage. Ainsi il n'est plus nécessaire de démonter le carter inférieur 11 pour accéder au galet tendeur 8. On peut par exemple considérer d'améliorer l'étanchéité du carter 11 inférieur, en introduisant une goulotte 32 sur le pourtour de l'ouverture prévue pour le passage d'une extrémité du vilebrequin sur laquelle se fixe une poulie 30 d'entraînement des accessoires. La goulotte 32 rentre à l'intérieur de la poulie d'accessoire pour empêcher la poussière et les saletés de pénétrer. Une telle disposition n'était pas envisageable avant, car elle imposait démonter la poulie 30 d'entraînement des accessoires avant de pouvoir démonter le carter inférieur 11.

Un des avantages est que le carter n'a plus à être démonté. L'avantage d'avoir une porte coulissante est qu'elle se déplace dans un plan parallèle à son plan à la face du couvercle, ce qui dans les zones d'espace disponible réduit permet d'accéder rapidement au composant à vérifier et à régler.

## Revendications

1. Carter (11) de distribution de moteur à combustion interne comportant une trappe d'accès à un composant (8) du moteur qui comporte une ouverture (12) formée dans une paroi du carter (11), une porte (13) montée coulissante sur le carter (11) entre une position fermée dans laquelle elle obture l'ouverture (12) et une position ouverte d'accès au composant (8) du moteur, **caractérisé en ce que** la trappe comporte des moyens de guidage définissant des rainures (15) de coulissement de la porte qui possèdent un angle d'ouverture d'au moins 1 degré de part et d'autre d'un plan médian par rapport à l'épaisseur de la porte (13).

2. Carter (11) de distribution de moteur à combustion interne selon la revendication 1, **caractérisé en ce que** les rainures sont définies sur des pattes (14) disposées sur les côtés de l'ouverture (12).

3. Carter (11) de distribution de moteur à combustion interne selon la revendication 1 ou 2, **caractérisé en ce que** les rainures (15) comportent un rétrécissement du côté où la porte (13) vient se bloquer.

4. Carter (11) de distribution de moteur à combustion interne selon l'une des revendications précédentes, **caractérisé en ce que** la trappe comporte des moyens de blocage de la porte (13) dans la position fermée.

5. Carter (11) de distribution de moteur à combustion interne selon l'une des revendications précédentes, **caractérisé en ce que** les moyens de blocage sont des moyens de blocage par emboîtement élastique.

6. Carter (11) de distribution de moteur à combustion interne selon l'une des revendications précédentes, **caractérisé en ce qu'**il comporte une goulotte d'étanchéité (32) rentrant à l'intérieur d'une poulie (30) d'entraînement des accessoires montée sur le vilebrequin du moteur.

7. Carter (11) de distribution de moteur à combustion interne selon l'une des revendications précédentes, **caractérisé en ce que** la porte (13) comporte un moyen de préhension.

8. Carter (11) de distribution de moteur à combustion interne selon l'une des revendications précédentes, **caractérisé en ce que** le composant est un galet tendeur (7) d'une courroie (2) de distribution.

## Claims

1. Internal combustion engine timing cover (11) comprising an access hatch providing access to an engine component (8) and which comprises an opening (12) formed in a wall of the cover (11), a hatch cover (13) mounted to slide on the cover (11) between a closed position in which it closes off the opening (12) and an open position for access to the engine component (8), **characterized in that** the hatch comprises guide means defining grooves (15) in which the hatch cover slides, which grooves have an angle of aperture of at least one degree on each side of a mid-plane considered with reference to the thickness of the hatch cover (13) .

2. Internal combustion engine timing cover (11) according to Claim 1, **characterized in that** the grooves are defined on legs (14) positioned along the sides of the opening (12).

3. Internal combustion engine timing cover (11) according to Claim 1 or 2, **characterized in that** the grooves (15) have a narrowing at the end at which the hatch cover (13) becomes jammed.

4. Internal combustion engine timing cover (11) according to one of the preceding claims, **characterized in that** the hatch comprises means of jamming the hatch cover (13) in the closed position.

5. Internal combustion engine timing cover (11) according to one of the preceding claims, **characterized in that** the jamming means are means that jam by elastic insetting.

6. Internal combustion engine timing cover (11) according to one of the preceding claims, **characterized in that** it comprises a sealing trough (32) which fits inside an accessories drive pulley (30) mounted on the engine crankshaft.

7. Internal combustion engine timing cover (11) according to one of the preceding claims, **characterized in that** the hatch cover (13) has a means for grasping.

8. Internal combustion engine timing cover (11) according to one of the preceding claims, **characterized in that** the component is a timing belt (2) tensioner roller (7).

## Patentansprüche

1. Steuergehäuse (11) für einen Verbrennungsmotor, das eine Zugangsklappe für ein Bauteil (8) des Motors aufweist, die eine in einer Wand des Gehäuses (11) ausgebildete Öffnung (12) und eine Tür (13), die an dem Gehäuse (11) zwischen einer geschlossenen Position, in der sie die Öffnung (12) verschließt, und einer geöffneten Position zum Zugang zu dem Bauteil (8) des Motors verschiebbar angebracht ist, umfasst, **dadurch gekennzeichnet, dass** die Klappe Führungsmittel aufweist, die Nuten (15) zum Verschieben der Tür definieren, welche einen Öffnungswinkel von mindestens 1 Grad auf beiden Seiten einer mittleren Ebene bezüglich der Dicke der Tür (13) aufweisen.

2. Steuergehäuse (11) für einen Verbrennungsmotor nach Anspruch 1, **dadurch gekennzeichnet, dass** die Nuten an Ansätzen (14) definiert sind, die an den Seiten der Öffnung (12) angeordnet sind.

3. Steuergehäuse (11) für einen Verbrennungsmotor nach Anspruch 1 oder 2, **dadurch gekennzeichnet, dass** die Nuten (15) eine Verengung auf der Seite aufweisen, auf der die Tür (13) gesperrt wird.

4. Steuergehäuse (11) für einen Verbrennungsmotor nach einem der vorhergehenden Ansprüche, **dadurch gekennzeichnet, dass** die Klappe Mittel zur Sperrung der Tür (13) in der geschlossenen Position aufweist.

5. Steuergehäuse (11) für einen Verbrennungsmotor nach einem der vorhergehenden Ansprüche, **dadurch gekennzeichnet, dass** die Sperrmittel Mittel zur Sperrung durch elastisches Ineinandergreifen aufweisen.

6. Steuergehäuse (11) für einen Verbrennungsmotor nach einem der vorhergehenden Ansprüche, **dadurch gekennzeichnet, dass** es einen Dichtungskanal (32) aufweist, der in das Innere einer Scheibe (30) zum Antrieb von auf der Kurbelwelle des Motors angebrachten Zubehörteilen eintritt.

7. Steuergehäuse (11) für einen Verbrennungsmotor nach einem der vorhergehenden Ansprüche, **dadurch gekennzeichnet, dass** die Tür (13) ein Greifmittel aufweist.

8. Steuergehäuse (11) für einen Verbrennungsmotor nach einem der vorhergehenden Ansprüche, **dadurch gekennzeichnet, dass** das Bauteil eine Andrückrolle (7) eines Steuerriemens (2) ist.
